# EUROPEAN PATENT APPLICATION

(11) **EP 1 845 000 A2**
(43) Date of publication of application: **17.10.2007**
(21) Application number: 07105941.4
(22) Date of filing: 11.04.2007
(51) Int. Cl.: B60T 13/02, B60T 13/74, F16D 55/08

(54) **Controller for electromechanical braking system with running clearance adjustment and method**

(30) Priority: 11.04.2006 US 744638 P
(71) Applicant: Goodrich Corporation, Charlotte, North Carolina 28217-4578 (US)
(72) Inventor: Liebert, Michael, 07006, NJ North Caldwell (US)
(74) Representative: Hilleringmann, Jochen

(57) **Abstract**

A system and method for establishing a running clearance position for an electromechanical actuator (30), wherein the running clearance is based on an actuator ram (36) position attained during an advancement of the actuator ram using a current limit that is less than a current limit used for the application of braking force to a brake stack (32). Generated is a commandable running clearance position as a function of the position value.

## Description

### RELATED APPLICATION DATA

This application claims the benefit of U.S Provisional Patent Application No. 60/744,638 filed April 11, 2006, the disclosure of which is herein incorporated by reference in its entirety.

### TECHNICAL FIELD

The invention described herein relates generally to electromechanical actuator systems and, more particularly, to an electromechanical braking system for a vehicle, such as an aircraft.

### BACKGROUND

Electromechanical brake systems are known in the art. In those systems, an actuator ram applies force to a stack of brake disks to brake a rotating wheel associated with the brake disk stack When no braking is desired, it has been desirable to position the actuator ram out of contact with the brake disk stack so that the wheel can rotate freely Often, this position is commanded by a controller and the commanded location is referred to as a running clearance position

As the disks wear through use of the brake system, the distance between the actuator ram in the running clearance position and the brake stack can increase. Also, during periods of braking, the brake disk stack and structural members of the brake system can undergo thermal expansion and contraction, which also changes the distance between the actuator ram in the running clearance position and the brake stack

Since it is desirable to maintain a running clearance that is small enough to allow rapid application of brake force and large enough to reduce the risk of inadvertent clamping caused by thermal expansion and brake stack variations, attempts have been made to monitor brake conditions to adjust the commanded running clearance position However, measuring brake disk stack wear and changes resulting from thermal expansion and contraction have proven to be exceedingly difficult.

### SUMMARY OF THE INVENTION

The present invention provides an electromechanical brake system that can establish a running clearance position based on an easily determined value. More particularly, the present invention provides a system and method for establishing a running clearance position for an electromechanical actuator, wherein the running clearance is based on an actuator ram position attained during a force application to a brake stack.

According to one aspect of the invention, there is provided a method of adjusting a running clearance of an electromechanical actuator that is operative to apply a braking force to brake of a wheel of a vehicle), the electromechanical brake actuator having a motor driven to control the displacement of a force applicator relative to a brake stack. The method includes commanding an advancement of the force applicator toward the brake stack using a current limit that is less than a current limit used for application of the braking force, determining a position attained by the force applicator when advancement of the force applicator stops, and generating a commandable running clearance position as a function of the attained position.

Preferably, the running clearance position is generated by combining the attained position, a reference running clearance gap and a brake deflection value In particular, the combining subtracts the brake deflection value and the reference running clearance gap from the attained position.

According to another aspect of the invention, there is provided a controller for an electromechanical brake actuator operative to apply a braking force to brake a wheel of a vehicle, the electromechanical brake actuator having a motor driven to control the displacement of a force applicator relative to a brake stack. The controller includes circuitry to adjust a running clearance of the force applicator with respect to the brake stack by commanding an advancement of the force applicator toward the brake stack using a current limit that is less than a current limit used for application of the braking force, determining a position attained by the force applicator when advancement of the force applicator stops and generating a commandable running clearance position as a function of the attained position.

### BRIEF DESCRIPTION OF DRAWINGS

These and further features of the present invention will be apparent with reference to the following description and drawings, wherein.
FIG. 1 is a schematic illustration of an exemplary aircraft having at least one electromechanical braking system in accordance with the present invention;
FIG. 2 is a block diagram of an exemplary braking system for the aircraft in accordance with the present invention;
FIG 3 is a schematic view of the exemplary braking system of FIG 2, showing an electromechanical actuator, an electromechanical actuator controller and a brake disk stack;
FIG. 4 is a cross-sectional view of an exemplary electromechanical actuator of FIG. 3,
FIG. 5 is a flow diagram representative of a running clearance adjustment logic routine of the controller of FIG. 3, and
FIG. 6 is a graphical representation of a method of establishing a commandable running clearance position in a braking system

### DESCRIPTION

In the description that follows, like components have been given the same reference numerals, regardless of whether they are shown in different embodiments To illustrate an embodiment(s) of the present invention in a clear and concise manner, the drawings may not necessarily be to scale and certain features may be shown in somewhat schematic form

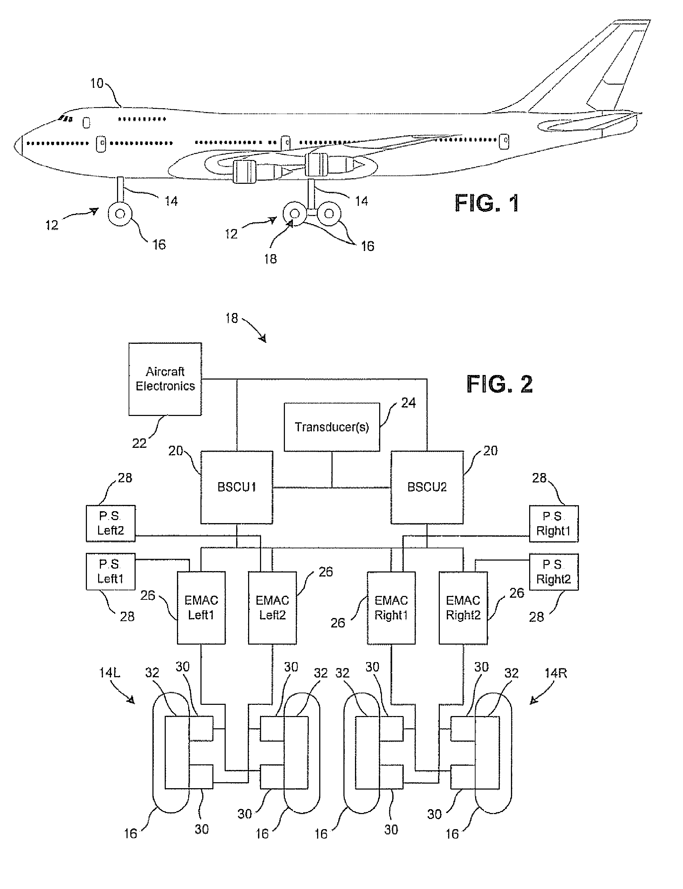

Referring initially to FIG. 1, an aircraft 10 has at least one electromechanical braking system associated with a wheel of the aircraft.. An exemplary electromechanical braking system in accordance with the present invention is described below The illustrated aircraft 10 is intended to depict a generic aircraft and not any particular make or model of aircraft. The system and methods described herein may have application to manned aircraft, including commercial and military aircraft, as well as unmanned aerial vehicles, such as the Global Hawk

The aircraft 10 includes landing gear 12 The landing gear 12 may include a fixed or moveable strut 14 and wheels 16. One of more of the wheels 16 can have a braking system 18 for braking the wheel 16.

With additional reference to FIG 2, shown is a block diagram of an exemplary braking system 18 for the aircraft 10. As will become more apparent through the following description, the braking system 18 includes an electromechanical actuator controller that draws power from a power source to drive a motor that controls movement of an actuator ram The actuator ram applies force to a brake disk stack (also referred to herein as a brake stack) that slows rotation of an associated one of the wheels 16. Running clearance position of the actuator ram is controlled by the electromechanical actuator controller as a function of movement of the actuator under modified current amounts For example, the running clearance position may be determined by advancing the actuator ram under a reduced current limit until no further movement is detected, and then subtracting a reference running clearance and a brake stack deflection value from the position of the actuator ram.

The braking system 18 shown in FIG. 2 represents an exemplary architecture for satisfying typical redundancy and performance specifications of an aircraft.. Such architecture is presented by way of example to illustrate the context in which the principles of the present invention may be employed. It will be appreciated, however, that the present invention has utility with other braking systems and systems other than braking systems. Therefore, the present invention is not limited to the particular architecture shown.

The system 18 includes two brake control units (BSCUs) 20 designated BSCU1 and BSCU2, respectively BSCU1 and BSCU2 are redundant and are both configured to provide an input/output interface to aircraft electronics 22 within a cockpit of the aircraft 10, for example, via a bus or network. In addition, BSCU1 and BSCU2 each contain circuitry (e.g., a processor for executing logic embodied as executable code) for performing top level brake control and antiskid algorithm processing functions. For manned aircraft, BSCU1 and BSCU2 may each receive proportional brake command signals from transducers 24 associated with user interface devices, such brake pedals or a parking brake switch or lever. For unmanned aircraft and possibly some manned aircraft, BSCU1 and BSCU2 may each receive proportional brake command signals from a remote operator or the aircraft electronics 22, such as a computer-based flight and/or braking controller.

BSCU1 and BSCU2 process the input signals based on the aforementioned brake control and antiskid algorithms to produce a brake command signal, or set of signals The brake command signal(s) are provided to electromechanical actuator controllers (EMACs) 26. Each EMAC 26 may form part of a corresponding BSCU 20 or each EMAC 26 may be implemented as a separate control device. The particular brake control and antiskid algorithms employed by the BSCUs 20 may be conventional As such, further detail based thereon is largely omitted in the present description for sake of brevity

BSCU1 and BSCU2 each provide brake commands and otherwise communicate with the EMACs 26 via a suitable infrastructure, such as a bus or network. In the illustrated system 18, there are four redundant EMACs 26 respectively labeled EMAC Left1, EMAC Left2, EMAC Right1 and EMAC Right2. As shown in FIG. 2, each EMAC 26 is coupled to the BSCUs 20 to receive brake commands (also referred to as input commands or input braking commands) from each of the BSCUs 20. Each EMAC 26 contains circuitry (e.g., a processor for executing logic embodied as executable code) for converting the brake commands into a motor current command Each EMAC 26 further contains a current driver for generating a motor drive signal based on the motor current command

Each EMAC 26 can derive power from an aircraft power supply 28. In the illustrated embodiment, EMAC left1 derives power from aircraft primary power supply left1, EMAC left2 derives power from aircraft primary power supply left2, EMAC right1 derives power from aircraft primary power supply right1, and EMAC right2 derives power from aircraft primary power supply right2.

The EMACs 26 may also be referred to simply as controllers 26. The controllers 26 receive left and right brake commands from the BSCUs 20 and provide the motor drive signal to brake actuator modules, also referred to as electromechanical actuators 30 or simply as actuators 30, to drive an actuator component to a commanded position In this manner, controlled braking may be accomplished

For each wheel 16, there may be multiple actuators 30 to apply braking force to a brake stack 32 in response to electrical control signals, or motor drive signal, provided by a respective controller 26. For example, the controllers 26 may be paired such that one of the controllers 26 of a pair controls half of the actuators 30 for an associated one of a left wing landing gear 14L or a right wing landing gear 14R. The controlled actuators 30 for any one controller 26 may be on different wheels 16 as shown or on the same wheel 16, in which case a single controller 26 may control all actuators 30 associated with one of the wheels 16

Additional details of suitable braking systems for the aircraft 10 may be found in commonly assigned U.S. Patent Nos. 6,003,640, 6,296,325, 6,402,259 and 6,662,907, the disclosures of which are incorporated herein by reference in their entireties.

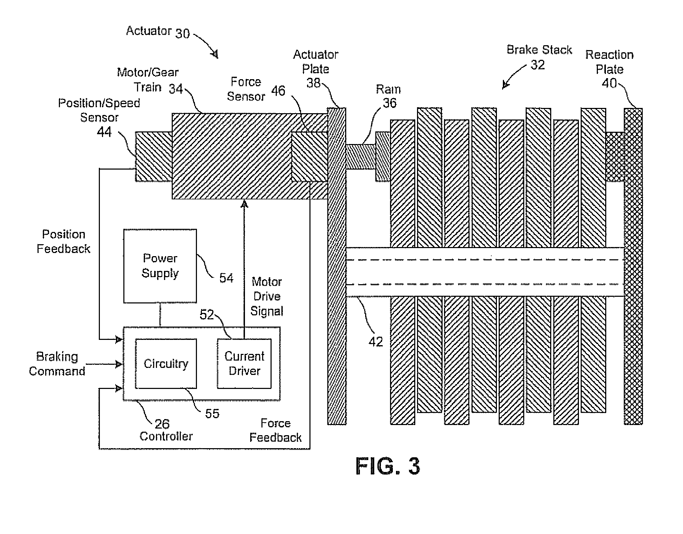

With additional reference to FIG 3, illustrated is a schematic view of the actuator 30 and controller 26 operatively arranged with the brake stack 32 The actuator 30 is configured to exert a controlled brake force on the brake stack 32. In the illustrated embodiment, the brake stack 32 includes multiple disks and is associated with one of the wheels 16 (FIGs. 1 and 2) of the aircraft 10 (FIG 1) to provide braking in response to pilot commands and/or antiskid commands. The brake stack 32 can include rotor disks that are keyed to the wheel 16 for rotation therewith. The disks that rotate with the wheel 16 are interleaved with stator disks that do not rotate with the wheel 16 Compression of the interleaved set of disks effects braking of the wheel 16. In one embodiment, the disks are made from a carbon based material, but the description herein may also have applicability to brake systems where the disks are made from other materials, such as steel.

The actuator 30 includes a motor and gear train 34 that drives an actuator ram 36 in an axial direction. The actuator ram 36 is also referred to herein as a force applicator. The actuator 30 is mounted to an actuator plate 38 through which the actuator ram 36 extends The brake stack 32 is positioned between the actuator plate 38 and a reaction plate 40. In order to exert a braking force, the motor and gear train 34 is controlled by the controller 26 to cause the actuator ram 36 to extend towards the brake stack 32 In this manner, a clamp or brake force is exerted on the brake stack 32 between the actuator ram 36 and the reaction plate 40 Torque is taken out by the brake stack 32 through a torque tube 42 or the like.

In order to release a braking force, the controller 26 controls the motor and gear train 34 to drive the actuator ram 36 in the reverse direction away from the brake stack 32. In the event of no braking, it is desirable to provide a running clearance between the brake stack engagement surface of the actuator ram 36 and the brake stack 32 Accordingly, the controller 26 controls the motor and gear train 34 to provide the desired running clearance when braking is not commanded. Establishment of a commandable running clearance position for the actuator ram 36 is described in greater detail below

The controller 26 receives as an input in the form of an input signal, such as a force or braking command signal. The value of the command signal is typically proportionally based on the degree to which the pilot has depressed a corresponding brake pedal. In the event of light braking, the command signal may have a low value that causes the controller 26 to drive the motor and gear train 34 such that the actuator ram 36 exerts a light brake force on the brake stack 32 Similarly, in the event of heavy braking the command signal may have a high value that causes the controller 26 to drive the motor and gear train 34 such that the actuator ram 36 exerts a heavy brake force on the brake stack 32. In addition, or in the alternative, the command signal may be based on the results of an antiskid control algorithm carried out by the controller 26 or elsewhere within the aircraft 10, such as in the BSCU 20 (FIG 2).

As shown in FIG. 3, the actuator 30 includes a position and/or speed sensing device 44 In one embodiment, the position and/or speed sensing device 44 is a embodied as a resolver that senses the position of the rotor of the motor in the motor and gear train 34 Accordingly, the position and/or speed sensing device 44 will also be referred to herein as a resolver 44. Based on the output of the resolver 44, the controller 26 is able to detect the direction and number of revolutions of the rotor and how fast the rotor is spinning (e.g., in revolutions per minute) Since the ratio of the gear train of the motor and gear train 34 in combination with the actuator ram 36 is known, the controller 26 is able to compute the position of the actuator ram 34 relative to a reference location and velocity of the actuator ram 34 based on the output of the resolver 44

In other embodiments, the position/speed sensor 44 may be embodied as a device for providing absolute position feedback to the controller 26, such as an LVDT transducer Regardless of the implementation, position feedback information assists the controller 26 in performing position based control functions of the actuator 30. According to the exemplary embodiment, the motor within the motor and gear train 34 is a brushless DC motor Consequently, the controller 26 also utilizes the output of the resolver 44 to determine the appropriate phasing of the power signals provided to the motor via the motor drive signal to provide a desired motor commutation In this manner, there is no need for separate position sensors for the DC motor and the actuator ram 36, respectively As will be appreciated, other types of motors are possible, such as a silicon controlled rectifier (SCR) motor

The actuator 30 may further include a force sensor 46 that detects the force exerted by the actuator ram 36 onto the brake stack 32.. The output of the force sensor 46 is fed back as a force feedback signal and is input to the controller 26 for performing force based control functions over the actuator 30. The force sensor 46 may be any type of known force sensor including, but not limited to, a force load cell or the like The running clearance adjustment techniques described herein do not rely on the output of the force sensor 46 and, therefore, may be applied to a braking system that does not include a force sensor.

In FIG 3, for sake of simplicity, only a single actuator 30 is shown for applying a brake force to the brake stack 32. However, as indicated above with respect to FIG. 2, it will be appreciated that typically the system will include multiple, identically operated actuators 30 spaced apart on the actuator plate 38 and each for exerting brake force on the brake stack 32 Each actuator 30 may have its own position/speed sensor 44 and force sensor 46 (if present) that provide feedback signals to the appropriate controller(s) 26.

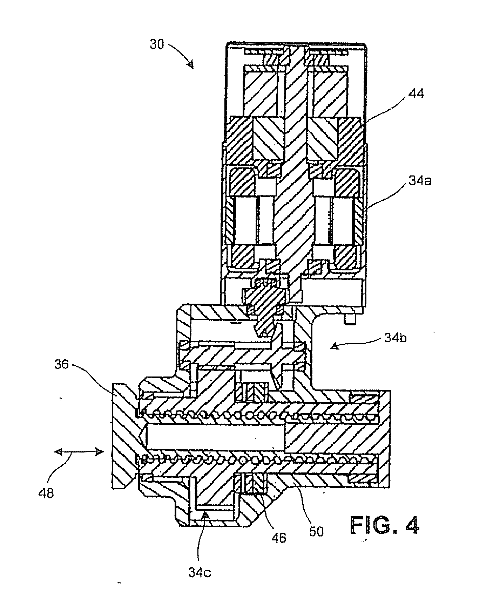

With additional reference to FIG. 4, the exemplary actuator 30 is shown in cross-section. The actuator 30 includes a motor 34a with an integral resolver position/speed sensor 44 The motor 34a drives a gear train 34b, which, in turn, drives a ballscrew assembly 34c The ballscrew assembly 34c drives the actuator ram 36 back and forth in the axial direction of arrow 48 so as to exert a force on the brake stack 32 (FIG. 3)

Reaction of the ballscrew assembly 34c, which corresponds to load reaction force of the actuator ram 36, is taken out through the force sensor 46 (if present) and into an actuator housing 50 and then into the actuator plate 36. In the illustrated embodiment, the force sensor 46 is a force load cell located between the ballscrew assembly 34c and the actuator housing 50. In this manner, the output of the force sensor 46 is indicative of the brake force applied by the actuator ram 36 to the brake stack 32

With continuing reference to FIGs 3 and 4, the controller 26 uses a closed loop feedback arrangement to generate the motor drive signal in accordance with the input braking command. For example, the controller 26 can use force and/or position compensation to convert the input braking command into a current command. A motor current driver 52 converts the current command into the motor drive signal with sufficient current to drive the motor 34a as desired, including generating sufficient torque to exert a desired amount of braking force on the brake stack 32 with the actuator ram 36 An exemplary description of position and force feedback based operation of the controller 26 may be found in U.S. Patent Application Serial No. 11/145,138, filed June 3, 2005, the disclosure of which is incorporated by reference in its entirety

Operational electrical power for motor drive signal generation by the motor driver 52 may be derived from a power supply 54. The power supply 54 may be any suitable power source available from the aircraft 10 For instance, the power supply 54 may be the power supply 28 of FIG 2, DC or AC power busses (connected to the controller directly or via a voltage converter), a battery, an independent power generator or combination of sources where one source supplements for another if the first were to fail to supply power

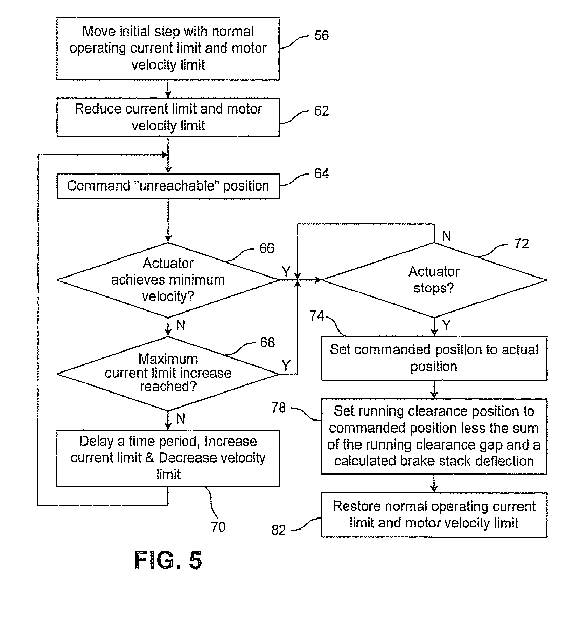

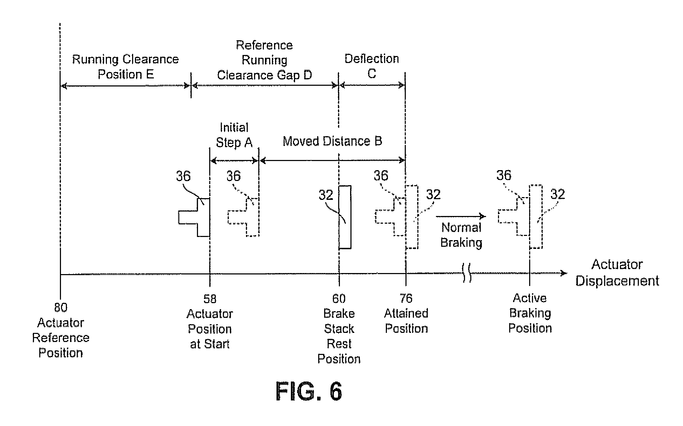

With additional reference to FIG 5, a flow diagram representative of a logic routine of the controller 26 is shown. FIG. 5, in conjunction with graphical representation of FIG 6, may be thought of as depicting steps in a method of establishing a commandable running clearance position in the braking system 18 (FIGs 1 and 2) The method may be carried out for each actuator 30 in the braking system 18 to establish a separate running clearance position for each actuator 30. The functionality relating the establishment of a running clearance position may be embodied in any suitable form, including software, firmware, dedicated circuit components, machine readable/usable media and so forth Accordingly, the controller 26 may include circuitry 55 to adjust a running clearance of the actuator ram 36 with respect to the brake stack 32. The circuitry 55 may take any suitable form, including a processor that executes logical instructions (e.g., in the form of software) and/or dedicated circuit components.

Although the illustrations appended hereto show a specific order of executing functional logic blocks, the order of execution of the blocks may be changed relative to the order shown Also, two or more blocks shown in succession may be executed concurrently or with partial concurrence. Certain blocks may also be omitted It is understood that all such variations are within the scope of the present invention

The method may begin in block 56 At the beginning of the method, the actuator ram 36 may be positioned at a starting position 58 so that the actuator ram 36 is in spaced relationship to the brake stack 32, which is in a rest position 60. This distance from the actuator ram 36 to the brake stack 32 is termed the nominal running clearance gap In block 56, the controller 26 commands movement of the actuator ram 36. For instance, the commanded movement relates to an initial movement, or initial step, to advance the actuator ram 36 toward the brake stack 32. In the illustrated embodiment, the commanded movement of block 56 is made under a current limit and a motor velocity limit that are used for normal braking operations The amount of the commanded movement (e g , expressed in linear travel distance of the actuator ram 36) is shown in FIG. 6 as the initial step A As will become more apparent below, commanding the initial step A using normal current and motor velocity limits assists in reducing the amount of time used to advance the actuator ram 36 into contact with the brake stack 32 since, following the initial step A, movement is commanded using reduced current and motor velocity limits. The current limit imposed at any given time is a limit to the current value represented in the current command input to the motor current driver 52 from which the motor drive signal is generated

After commanding the initial step A, the process can proceed to block 62 where the current limit and the motor velocity limit are reduced relative to the limits used during normal braking operations. It is contemplated that reduced current and motor velocity limits reduce the amount of torque that may be applied by the actuator ram 36 on the brake stack 32, once contact is made.

In block 64, the controller 26 commands an "unreachable" position An unreachable position relates to a displacement of the actuator ram 36 that cannot be practically achieved For example, the unreachable position may be a maximum range of the actuator ram 36 when no object is positioned to impede the progress of the actuator ram 36. Although the brake stack 32 may be displaced a certain amount by the actuator ram 36 depending on the amount of force applied by the actuator ram 36, the presence of the brake stack 32 will typically prevent travel of the actuator ram 36 past a certain distance that is less than the maximum range of the actuator ram 36

Next, in block 66, the controller 26 determines if the actuator ram 36 is moving in response to the command of block 64 and that the actuator ram 36 is traveling at a predetermined minimum velocity. Velocity of the actuator ram 36 may be determined as a function of rotational speed of the motor, for example As an example, the predetermined rotational speed may be about 50 radians per second Predetermined velocity is preferably selected to be a velocity under which sustained movement of the ram 36 may be achieved assuming that no impeding object, such as the brake stack 32, comes into contact with the ram 36 In this manner, conditions that may preclude movement of the ram 36 or stop a moving ram 36 under the reduced current limit and motor velocity limit may be addressed For instance, when the components are cold, sustained movement of the ram 36 may be difficult to achieve using the reduced current and velocity limits. Also, the winding configuration of the stator and/or rotor of the motor may lead to positions where with the motor may stop when using the reduced current and velocity limits

Upon a negative determination in block 66 (corresponding to no detected movement of the actuator ram 36 or movement of the ram 36 with less than the predetermined minimum velocity), the method proceeds to block 68 In block 68, a determination may be made as to whether a predetermined maximum current limit increase from the current limit established in block 62 has been achieved. In one embodiment, the maximum current limit may be a current value (e.g., two amperes) If the current limit has reached the predetermined maximum, it may be assumed that a condition is precluding movement of the ram 36. One condition may be that a braking operation is being held for a period of time and the torque tube 42 and/or other brake components that previously underwent thermal expansion due to braking have begun to contract. In this situation, no movement of the ram 36 may be detected in block 66 since the ram 36 is positioned against the brake stack 32. Therefore, if a positive determination is made in block 68, the logical flow may transition to block 72.

Another condition that may result in a positive determination in block 68 is a performance problem of the actuator 30.. In this situation, error flags may be set to indicate the possible performance problem with the actuator 30.

If a negative determination is made in block 68, the logical flow may proceed to block 70 where a delay may be imposed The delay may be, for example, a few milliseconds. The delay is used to minimize the possibility of cycling the logical loop before the actuator has a chance to mechanically react to the command of block 64

Also, in block 70, the current limit is increased relative to the reduced limit established in block 62. In one embodiment, the current limit is increased by 10% of the current limit established in block 62 and any increases thereto resulting from previous iterations of block 70 In other embodiments, the current limit may be increased by a predetermined value for each iteration of block 70 Also, in block 70, the velocity limit of the controller 26 may be decreased Following block 70, the logical flow may return to block 64. Following block 70, the logical flow may return to block 64.

Upon a positive determination in block 66, the process may proceed to block 72. In block 72, a determination may be made as to whether the actuator 30 has stopped moving (or is not moving as a result of arriving at block 72 from block 68). If a negative determination is made, the logical flow may wait for a positive determination Upon a positive determination, the logical flow may proceed to block 76.

In block 74, the actual position attained by the actuator ram 36 is used to set the commanded position of the actuator ram 36.. That is, the location achieved by the actuator ram 36 as a result of being commanded to an unreachable position under reduced current and motor velocity limits (blocks 62 through 72) is used to dictate the value of commanded position It is contemplated that if the controller 26 had commanded such a commanded position using normal current and motor velocity limits, the actual position achieved after block 72 would be attained. The location attained through block 72 is identified in FIG. 6 as attained position 76. The distance traversed from the position attained at the end of the initial step A to the attained position 76 is identified as moved distance B.

As depicted graphically in FIG. 6, the actuator ram 36 may deflect the brake stack 32 as a result of the actuation of the actuator ram 36 under reduced current and motor velocity limits In theory, using reduced current and motor velocity limits may be used to find the "just touching" position of the actuator ram 36 against the brake stack 32 In reality, however, the logical flow is implemented so that there is a higher probability that the brake stack 32 provides resistance to further movement of the actuator ram 36 rather than internal resistance of the motor and gear train assembly 34. As a result, enough force is exerted on the brake stack 32 by the actuator 30 to invoke a reaction of the brake stack 32 in the form of deflection, but, in most embodiments, the force is low enough to not generate significant braking of the associated wheel

The amount of deflection, identified as deflection C in FIG 6, is independent of wearing of the brake stack 32 and thermal expansion/contraction of the braking system 18 components, including the brake stack 32, the actuator ram 36, the actuator plate 38, the reaction plate 40, torque tube 42, etc.

In the illustrated embodiment, the amount of brake stack deflection C may be estimated using a calculation that is based on a function of the current limit and known behavior of the system.. For instance, the amount of brake stack 32 deflection C may be a known value for a given brake system arrangement under given control parameters as determined by observing the performance of similarly arranged brake system 18. For example, by experimenting with a sample brake system(s) 18, the amount of deflection C resulting from the process of blocks 62-72 may be determined.

With continued reference to the figures, the process may proceed in block 78 where a running clearance position is established The running clearance position (identified by the letter E in FIG 6), is established by subtracting a reference running clearance gap (identified by the letter D in FIG 6) and the deflection C from the attained position 76. The attained position 76 is a value relative to an actuator reference position 80, such as the position of the actuator ram 36 when fully retracted within the mechanical limits of the actuator 30. The reference running clearance gap is a target, or desired, separation between the actuator ram 36 and the brake stack 32 when braking is enabled, but no braking is commanded As should be appreciated, the running clearance position is the position of the actuator ram 36 to achieve the desired running clearance gap and may be commanded relative to the actuator reference position 80 Alternatively, the running clearance position may be commanded relative to the attained position 76. During normal braking operations, the controller 26 may command movement of the actuator ram 36 relative to the running clearance position E

Once the running clearance position is determined, the process may proceed to block 82 where the normal current limit and the normal motor velocity limits are restored for use in subsequent normal braking operations of the braking system 18.

For purposes of an example, an exemplary braking system 18 will be described using exemplary values for the distances and parameters described above. In the example, one may assume that the distance between the actuator ram 36 in the start position 58 and the brake stack 32 in the rest position 60 (the nominal running clearance gap) is about 0 025" ± 0.005". In the example, the initial step A may be about 0 010" Continuing with the example, the reduced current limit may be about 0.25 Amps and the reduced motor velocity limit may be about 75 rad/sec The maximum range of the actuator ram 36 may be about 0.43". Using a threshold for block 68 of about 1.0 Amp, the deflection resulting from the performance of blocks 62-72 may be about 0.012" Full deflection of the brake stack 32 under full braking force may be about 0.055" (or 0.080" from the running clearance position) If the reference running clearance gap D is about 0.025", then the running clearance position E may be the attained position 76 minus 0.037", which is the sum of the deflection C (0.012") and the reference running clearance gap D (0.025").

As will be appreciated, the forgoing method establishes a commandable running clearance position. In the method, fairly expeditious travel is made through a nominal running clearance gap using an initial step. Then, a lightly touching position of the actuator ram 36 (referred to above as the attained position 76) is determined From that attained position, the running clearance position may be calculated based on known values, including the deflection of the brake stack in the lightly touching position and the desired amount of running clearance gap The establishment of the running clearance position may be accurately made regardless of the amount of wear experienced by the brake stack 32 or the actuator ram 36 and regardless of the amount of thermal expansion or contraction of the braking system 18 components Establishing the running clearance position using the lightly touching position is believed to provide more consistent results than if one were to make similar determinations through the application of higher amounts of force (e g , as would be experienced during the commandment of braking) or through attempting to determine the just touching position In addition, the process described herein may be used to avoid the use of uncommanded braking to establish the running clearance position

The foregoing process may be carried out at various times to establish and reestablish the running clearance position For example, the process may be carried out when the aircraft 10 is powered on to find a cold temperature running clearance position The cold temperature running clearance position may be used for taxiing of the aircraft 10 prior to take-off and for landing of the aircraft 10. In other embodiments, a cold temperature running clearance position may be determined during flight for use on landing of the aircraft 10

Following landing, the process may be carried out one or more times to establish a running clearance position for use during return taxiing of the aircraft 10 After landing, the components of the braking system 18 may be hot and have undergone thermal expansion Therefore, each time braking is commanded after aircraft 10 landing, the application of braking force may be preceded by carrying out the process described herein to establish a running clearance position to be used after the actuator ram 18 is retracted from the brake stack 32 For instance, after landing, when braking is commanded, the running clearance position calibration process described above is carried out, the commanded braking is performed and then the actuator ram 36 is positioned at the most recently calculated running clearance position..

A provision to use the cold temperature running clearance position may be added to such a post-landing braking routine if the aircraft has sat for an extended period after landing and it is possible that the components of the braking system 18 have cooled The provision to return to the cold temperature running clearance position allows for the possibility that the actuator plate 38, reaction plate 40, torque tube 42 and/or actuator 30 may have thermally contracted so that the actuator ram 36 touches ("contracted into") the brake stack 32. Another provision may periodically use a current value to hold an actuator ram 36 position rather than a commanded position value so that current variations may be used to check for thermal expansion or contraction of the braking system 18.

It will be appreciated that the control functions of the controller 26, including the process to establish the running clearance position, may be embodied as executable logic that is executed by a processor of the controller 26. Alternatively, dedicated circuitry may be used to carry out the control functions described herein In one embodiment, the controller 26 may include an inner current servo control loop and an outer position servo control loop, as well as an outer force servo control loop, if appropriate As part of the operation of the controller, the control loops may be limited by the motor current limit and the motor velocity limit As will be appreciated, other feedback control techniques are possible, each of which are intended to fall within the scope of the present invention

As will be appreciated, determination of the running clearance position is based on actuator ram 36 position attained during a light force application to the brake stack 32 The actuator ram 36 position attained during a light force application to the brake stack 32 is dependent, in part, on brake stack 32 wear and thermal expansion/contraction of the brake stack 32 and brake system components, such as the actuator 30, the reaction plate 40, the torque tube 42 and the actuator plate 38 As a result, the determined running clearance position includes compensation for brake stack 32 wear and thermal expansion/contraction.

It will be appreciated that the present invention is not limited to an electromechanical actuation assembly for braking, but any electromechanical system where a running clearance is desired between an actuator and an item acted upon by actuator In addition, the invention has application to the braking systems of vehicles other than an aircraft (e.g., train brakes) and systems other than braking systems (e.g., electromechanical clutch assemblies).

Although the invention has been shown and described with respect to a certain preferred embodiment or embodiments, it is understood that equivalent alterations and modifications will occur to others skilled in the art upon the reading and understanding of this specification and the annexed drawings In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclased structure which performs the function in the herein illustrated exemplary embodiment or embodiments of the invention In addition, while a particular feature of the invention may have been described above with respect to only one or more of several illustrated embodiments, such feature may be combined with one or more other features of the other embodiments, as may be desired and advantageous for any given or particular application.

## Claims

1. A method of adjusting a running clearance of an electromechanical actuator (30) that is operative to apply a braking force to brake of a wheel (16) of a vehicle (10), the electromechanical brake actuator having a motor (34a) driven to control the displacement of a force applicator (36) relative to a brake stack (32), comprising:
commanding an advancement of the force applicator toward the brake stack using a current limit that is less than a current limit used for application of the braking force;
determining a position attained by the force applicator when advancement of the force applicator stops; and
generating a commandable running clearance position as a function of the attained position..

2. The method of claim 1, wherein the running clearance position is generated by combining the attained position, a reference running clearance gap and a brake deflection value.

3. The method of claim 2, wherein the combining subtracts the brake deflection value and the reference running clearance gap from the attained position

4. The method of any of claims 1-3, further comprising setting a commanded position value for the force applicator to the attained position

5. The method of any of claims 1-4, wherein the commanded advancement is made using a motor velocity limit that is less than a motor velocity limit used for application of the braking force.

6. The method of any of claims 1-5, further comprising commanding an initial advancement of the force applicator using the braking force current limit prior to commanding the advancement of the force applicator toward the brake stack using the current limit that is less than the braking force current limit.

7. The method of any of claims 1-6, wherein the vehicle is an aircraft and the method includes generating a cold temperature running clearance position prior to take-off of the aircraft for use during landing of the aircraft

8. The method of any of claims 1-7, wherein the vehicle is an aircraft and the method includes generating a cold temperature running clearance position during flight for use during landing of the aircraft.

9. The method of any of claims 1-8, wherein the vehicle is an aircraft and the method includes generating the running clearance position after aircraft landing and at the beginning of an application of braking force, the running clearance position for use between the application of braking force and a subsequent application of braking force

10. The method of any of claims 1-9, wherein commanding advancement of the force applicator using the current limit that is less than the braking force current limit includes incrementally increasing the current limit and commanding advancement of the force applicator under each incremental current limit

11. The method of claim 10, wherein the current limit is incrementally increased to not more than a predetermined value.

12. The method of any of claims 1-11, further comprising commanding the electromechanical actuator to position the force applicator at a location corresponding to the commandable running clearance position when braking is not commanded.

13. The method of any of claims 1-12, wherein the vehicle is an aircraft

14. A controller (26) for an electromechanical brake actuator (30) operative to apply a braking force to brake a wheel (16) of a vehicle (10), the electromechanical brake actuator having a motor (34a) driven to control the displacement of a force applicator (36) relative to a brake stack (32), the controller comprising circuitry (55) to adjust a running clearance of the force applicator with respect to the brake stack by commanding an advancement of the force applicator toward the brake stack using a current limit that is less than a current limit used for application of the braking force, determining a position attained by the force applicator when advancement of the force applicator stops and generating a commandable running clearance position as a function of the attained position

15. The controller of claim 14, wherein the running clearance position is generated by combining the attained position, a reference running clearance gap and a brake deflection value.

16. The controller of claim 15, wherein the combining subtracts the brake deflection value and the reference running clearance gap from the attained position..

17. The controller of any of claims 14-16, wherein the controller sets a commanded position value for the force actuator to the attained position

18. The controller of any of claims 14-17, wherein the circuitry to adjust a running clearance of the force applicator commands advancement of the force applicator using a motor velocity limit that is less than a motor velocity limit used for application of the braking force

19. The controller of any of claims 14-18, wherein the circuitry to adjust a running clearance of the force applicator commands an advancement of the force applicator using the braking force current limit prior to commanding an advancement of the force applicator toward the brake stack using the current limit that is less than the braking force current limit..

20. The controller of any of claims 14-19, wherein the vehicle is an aircraft and the circuitry to adjust the running clearance of the force applicator generates a cold temperature running clearance position prior to take-off of the aircraft for use during landing of the aircraft

21. The controller of any of claims 14-19, wherein the vehicle is an aircraft and the circuitry to adjust the running clearance of the force applicator generates a cold temperature running clearance position during flight for use during landing of the aircraft

22. The controller of any of claims 14-21, wherein the vehicle is an aircraft and the circuitry to adjust the running clearance of the force applicator generates the running clearance position after aircraft landing and at the beginning of an application of braking force, the running clearance position for use between the application of braking force and a subsequent application of braking force

23. The controller of any of claims 14-22, wherein advancing of the force applicator using the current limit that is less than the braking force current limit includes incrementally increasing the current limit and commanding advancement of the force applicator under each incremental current limit..

24. The controller of claim 23, wherein the current limit is incrementally increased to not more than a predetermined value.

25. The controller of any of claims 14-24, wherein the circuitry includes a processor that executes logical instructions

26. The controller of any of claims 14-25, wherein the vehicle is an aircraft
